# EUROPEAN PATENT APPLICATION

(11) **EP 2 282 287 A1**
(43) Date of publication of application: **09.02.2011**
(21) Application number: 09305707.3
(22) Date of filing: 28.07.2009
(51) Int. Cl.: G06Q 10/00

(54) **Method to keep coherent a travel shopping basket**

(71) Applicant: Amadeus S.A.S., 06410 Biot (FR)
(72) Inventor: Vieillard-Baron, Bruno, 06410, Biot (FR); Engvall, Tobias, 06410, Biot (FR); Tonnet, Odile, 06410, Biot (FR)
(74) Representative: Decobert, Jean-Pascal

(57) **Abstract**

A method of keeping coherent contents of a travel shopping basket gathering travel products from independent travel service providers is described. The method is **characterized in that** it comprises a first step to synchronize the travel shopping basket upon reception of notifications of changes received from the independent travel service providers, and to further determine what changes have been brought to the gathered travel products by the independent travel service providers. It comprises a second step to aggregate the changes into the travel shopping basket so that to transform characteristics of the gathered travel products into specific attributes of the travel shopping basket; and to integrate local attributes into the travel shopping basket. Finally, a third step is aimed at correlating all attributes of the travel shopping basket against each other, matching all attributes functionally equivalent and removing duplicated attributes from the travel shopping basket.

## Description

### FIELD OF THE INVENTION

The present invention relates generally to the field of travel reservations, and more particularly, to a method to keep coherent the data of travel products in the context of creation of a super-PNR (passenger name record) when independent travel products are updated.

### BACKGROUND OF THE INVENTION

The term PNR, which stands for passenger name record, has been originally coined in the travel industry by airlines to designate the collection of records held in their computerized reservation systems and containing all the necessary information about their passengers and travel itineraries. The term PNR has then spread to the whole travel industry eventually applying to all forms of passenger transportation and possibly used also for other travel services including, e.g., lodging.

In practice, PNRs are often created and managed by a few global distribution systems (GDSs) from their large storing, computing and networking resources. Indeed, GDSs provide on a world-wide basis travel services to all the actors of the travel industry including airlines, traditional travel agencies and other online travel service providers. Such a GDS is for example AMADEUS, a European travel service provider with headquarters in Madrid, Spain.

Standard PNRs may however only include the travel services offered by whichever travel provider is issuing the PNR. Hence, if created by an airline, the PNR will only possibly include flights and travel services provided by that airline company. GDS created PNRs may thus include a much larger scope of travel services since all offered services of the travel companies affiliated to the GDS can be part of a single PNR. Typically, a standard GDS PNR is already possibly comprised of flights, car rentals and hotel rooms coming from any of its affiliated travel companies.

In spite of the greater flexibility already offered by GDS PNRs the expectation of travelers goes well beyond what those PNRs can presently imbed. Ideally, travelers want to have a single view and a single interface for their travel packages. This assumes the possibility of including in the packages travel products offered from independent travel sources, i.e., from companies not affiliated to a GDS like the low-cost air carriers. This also assumes the possibility of imbedding leisure travel services that are not part of any GDS offering and must be booked each through a dedicated provider; e.g., a provider of tours and cruises. To fulfill this expectation, the travel industry has promoted in the past years the use of a more dynamic travel package concept generally referred to under the name of super-PNR.

Hence, the final objective of a super-PNR is to allow the seamless combination of different travel components, bundled and priced as a whole in real time, in response to the direct request of the travel customer or via an agent of a travel agency. Even though this final objective cannot be accomplished in practice without having to go through intermediate development steps where single travel containers are devised to best accommodate all discrepancies between the various aggregated travel products the final objective is indeed to prevent travelers from having to plan and book the various travel components through independent reservation channels issuing standard PNRs. The intent of the super-PNR is to avoid multiple registrations, payments and independent bookings that must all complete successfully to obtain the complete expected travel package.

If it is potentially of a great help to the travelers the implementation of an effective super-PNR is however only achievable if the problems posed by the aggregation of reservations coming from independent sources can all be actually solved. Beyond its initial creation, modifications brought to a super-PNR need usually to be handled with caution. Having the information spread across multiple systems implies to be able to comply with potentially conflicting update policies. If done carelessly, updating only part of an overall journey could break the overall super-PNR coherence (e.g.: shifting car rental dates without being able to shift the related flights). Indeed, the various providers of travel services part of a super-PNR can still legitimately access their respective travel products directly to perform modifications (e.g.: airline schedule changes, flight cancellation) without taking into account the wider entity that a super-PNR constitute; thus, possibly breaking integrity and/or coherency of this latter.

It is therefore a prime object of the invention to describe a method of creating a new super-PNR data structure that allows the aggregation of independent travel products while continuously keeping coherent super-PNR contents in spite of updates possibly brought to the independent travel products by their owners.

Further objects, features and advantages of the present invention will become apparent to the ones skilled in the art upon examination of the following description in reference to the accompanying drawings. It is intended that any additional advantages be incorporated herein.

### SUMMARY OF THE INVENTION

The above objects are fulfilled by the invention which provides a method of keeping coherent the data of a booking cluster gathering definition data of travel products obtained from a plurality of travel service providers. The method comprises the steps of:
- synchronizing the data of the booking cluster by:
   - receiving definition data changes from a travel service provider,
   - determining what changes have been brought by the travel service provider to the definition data; and
- aggregating the changes into the booking cluster by:
   - transforming the definition data changes into remote attributes of the booking cluster,
   - integrating local attributes into the booking cluster; and
- correlating all attributes of the booking cluster against each other by:
   - matching all attributes functionally equivalent; and,
   - removing duplicated attributes from the booking cluster.

The method of the invention may further include following optional features introduced hereafter:
- the definition data of travel products are characteristics of passenger name records (PNRs) issued from computerized reservation systems of a plurality of travel service providers, and wherein characteristics of the passenger name records are comprised of segments and attributes.
- for each passenger name record, creating a reservation record (210) in the booking cluster, said reservation record (210) maintaining a link with said passenger name record,
- determining what changes have been brought by a travel service provider to the definition data consists in scanning a passenger name record for determining what segments and attributes of said passenger name record have been removed or added by the travel service provider,
- determining what attributes of the booking cluster must be modified, removed and added,
- defining a link between each remote attribute of the booking cluster and at least one segment of at least one passenger name record,
- storing the links in the booking cluster,
- the booking cluster is stored back in a database of booking clusters under the form of a series of records by a serialization process,
- the booking cluster is restored upon request by a de-serialization process from the series of records stored in the database of booking clusters,
- the aggregating and correlating steps are driven by a set of rules held in the booking cluster.

The invention further discloses system of keeping coherent the data of a booking cluster gathering definition data of travel products derived from characteristics of passenger name records from a plurality of travel service providers,
wherein the booking cluster comprises:
- reservation records each maintaining a link with one passenger name record,
- a shopping basket element holding local attributes specific to the booking cluster;
- a virtual shopping basket element aggregating remote attributes each having a link to at least one segment of at least one passenger name record,
and said system comprising:
means for synchronizing the data of the booking cluster, said means adapted for:
   - receiving definition data changes from a travel service provider,
   - determining what changes have been brought by the travel service provider to the definition data; and
means for aggregating the changes into the booking cluster, said means adapted for:
   - transforming the definition data changes into remote attributes of the booking cluster,
   - integrating local attributes into the booking cluster;
means for correlating all attributes of the booking cluster against each other, said means adapted for:
   - matching all attributes functionally equivalent; and,
   - removing duplicated attributes from the booking cluster.

According to a preferred embodiment the booking cluster comprises a repository of rules for driving the aggregating means and the correlating means.

The invention further describes a computer program product stored on a computer readable storage medium, comprising computer readable code means for causing at least one computer to operate the above method of keeping coherent contents of a booking cluster.

### BRIEF DESCRIPTION OF THE DRAWINGS

The drawings show some features of the invention according to a preferred embodiment in which the booking cluster is in the form of a shopping basket.
FIGURE 1 shows the overall computing and networking environment in which the super-PNR takes place.
FIGURE 2 shows how the shopping basket (SBK) is structured to provide super-PNR functionality to end-users of a reservation system.
FIGURE 3 shows the steps of the method to continuously keep shopping basket coherent.
FIGURE 4 describes the implementation of the shopping basket.
FIGURE 5 discusses the virtualization layer which carries out the aggregation and correlation processes.
FIGURE 6 further describes the synchronization layer of the SBK.

### DETAILED DESCRIPTION

The following detailed description of the invention refers to the accompanying drawings. While the description includes exemplary embodiments, other embodiments are possible, and changes may be made to the embodiments described without departing from the spirit and scope of the invention.

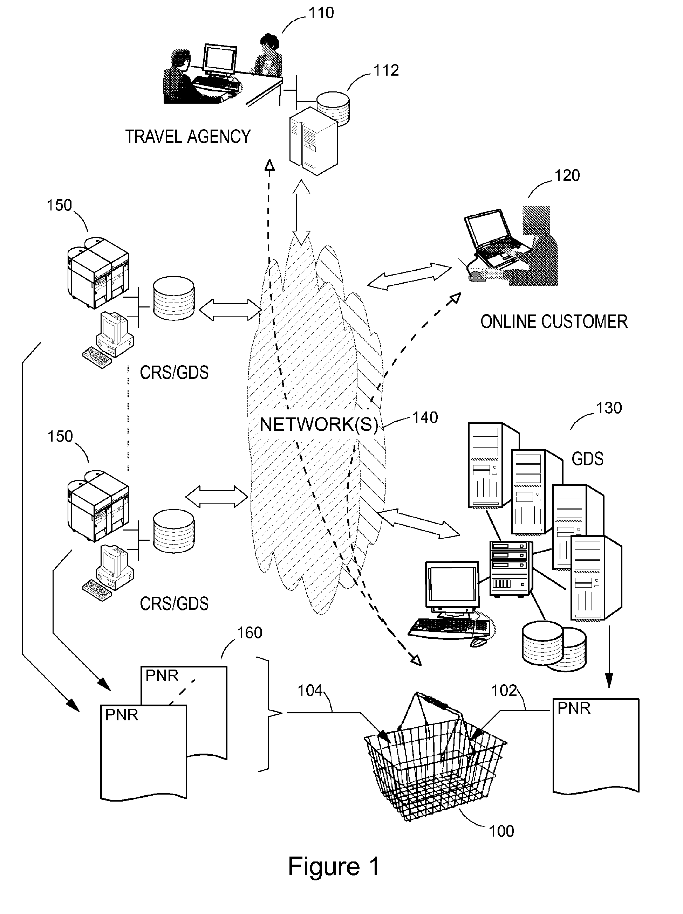

Figure 1 shows the overall computing and networking environment in which the invention takes place.

According to the invention the data defining the travel products and obtained from various travel providers constitute a super-PNR structure of a new kind which is called booking cluster. Thanks to its structure, the booking cluster gathers heterogeneous information obtained from multiple travel provider systems and transforms it to optimize the management (such as the updating) of the super-PNR data. In this environment and as depicted in figure 1 the booking cluster can be viewed as a virtual shopping basket (100) in which travel customers are dropping, online, individual travel products so as to compose a complete travel package of their choice. The customers are, e.g., travelers having recourse to the services of a conventional travel agency (110) or the end-users (120) of an online travel agency. End-users and travel agents are both remotely connected to computing resources put in place by a service travel provider. Typically, a travel service provider is any GDS mentioned in the background section. GDSs operate large computing and storing resources (130) to provide worldwide services to the whole travel industry including conventional travel agencies and all sorts of online travel sites from which direct booking of travel products is made possible. GDS resources are accessed through any combination of public and private networks (140) including the world public network, i.e., the Internet. Private networks are typically those put in place by travel agencies to connect travel agents to local computing resources (112). Similarly, GDS resources are all interconnected. This is generally achieved by implementing any form of local area network (LAN), e.g.: an Ethernet LAN. Individual end-users are connecting using the standard client/server protocols of the Internet. That is, client side is running on the personal computer (120) of the end-user under the form a navigator or web browser. The server side is provided by the travel service provider which operates the corresponding travel sites. GDS supported travel agencies may have their own protocols and means for accessing the available travel resources. Whichever the origin of the requests, the travel information is however gathered and retrieved from a common set of databases, e.g., the fare and seat availability of airline carriers stored and maintained by the GDS (130).

The whole concept of super-PNR is that travelers are no longer bound to choose products proposed by a single travel service provider, e.g., a single GDS (130), but can also gather travel products coming from other independent inventory management systems; thus, allowing to mix GDS own products (102) with that of others (104). For example, the air reservation could come directly from an airline inventory system or another GDS. The hotel room could originate in the inventory system of a large hotel chain. Leisure activities (show tickets, tours, etc.) could each come from a variety of different systems and so on. Hence, the implementation of a super-PNR by a travel service provider (130) assumes that computer reservation system or CRS (150) of other travel product providers, and other GDSs, are accessed through the public network (140) so that individual PNRs (160) are generated by their corresponding reservation systems and gathered into a virtual shopping basket (100). This process gives travelers access to a tremendous selection of travel product inventories. Independent travel products are thus assembled and viewed by the end-user as a seamless single entity: the super-PNR.

However, it remains that the individual PNRs that compose the super-PNR stay each under the control of their respective systems. Then, the main difficulty is to keep coherent the super-PNR contents over its lifespan while individual PNRs may have to change either because of change requests initiated by the travelers or due to mandatory changes such as a flight cancellation. The super-PNR is thus essentially a dynamic package establishing links with the underlying independent PNRs and systems to provide a single interface to the end-users in order to continuously keep contents coherent as explained in the following description of the invention.

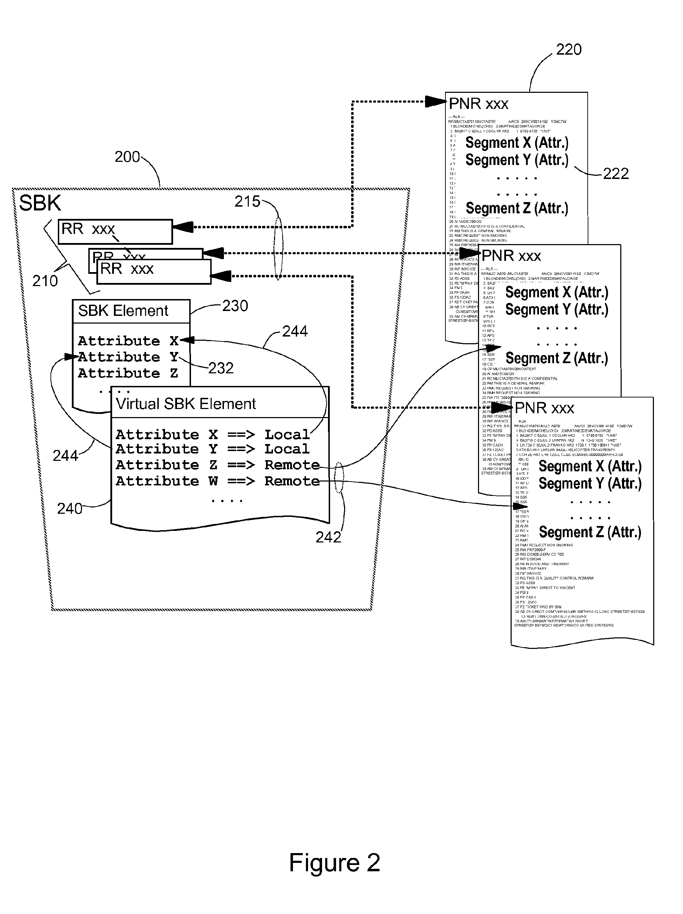

Figure 2 shows how the shopping basket (SBK) is structured to provide super-PNR functionality to end-users of a reservation system.

SBK (200) includes as many reservation records (RR) as there are underlying standard PNRs linked to the super-PNR. Each RR (210) creates and maintains a dynamic link (215) with a specific PNR (220). As discussed in Figure 1 PNRs are held by their respective reservation systems. The system providing the super-PNR functionality, e.g., a GDS, can also possibly hold its own database of standard PNRs so that they are internally linked to the SBK too. Otherwise, external links through a public network are established with the corresponding independent reservation systems where PNRs are remotely held and maintained. The invention does not make any assumption on the type of link used. For example, EDIFACT (electronic data interchange for administration, commerce and transport) messages, a standard promoted by the United Nations (UN) organization and the international air transport association (IATA), can be used to establish a communication channel with the remote PNRs. XML messages can be used too (XML stands for "Extensible Mark up Language). Whichever method is used to link SBK to PNRs (internal and/or external) SBK is assumed to be kept updated of all changes brought to the underlying PNRs by their respective systems. This is done in real-time whenever possible. It is however dependent of the actual level of availability and integration of the travel systems involved.

Standard PNRs (220) are data structure listing, in a coded form, a reservation of travel products (air seat, car, hotel room, etc.). In the following description of the invention information items contained in a PNR are broadly referred to as segments (222) each possibly having several attributes. PNR segments and their attributes refer to such things as the passengers names, their itineraries, the traveling dates, their preferences (special meals, smoking or not), their contacts (addresses, phone numbers) and so on. Although de-facto standardization somehow exists, PNRs may differ to some extent from an independent system to another. Also, PNRs may be significantly different when they address travel products as different as, e.g., hotel rooms and flight seats. Since SBK must offer a unique consolidated view of the underlying linked PNRs it is a key function of the 'virtual SBK element' (240) to mask the differences to the end-users of the shopping basket. To this end, the virtual SBK element includes its own set of attributes which are of two types: local and remote.

The remote attributes (242) of the SBK are those that make reference to identified remote PNR segments and their attributes. However, granularity of the SBK is not necessarily the one of the underlying PNRs. Hence, one may not have a one to one correspondence between a PNR segment and a SBK element. In particular, a SBK element can aggregate multiple PNR segments. For example, an ID element can be defined in the SBK which regroups passenger name, contact and frequent traveler data while this information is normally spread on several segments in the corresponding PNR. When the remote PNR segments are modified by their reservation systems the shopping basket is informed and the updated PNR segments are collected through the established communication channel mentioned above in order to update in turn the impacted shopping basket attributes.

The local attributes (244) of the virtual SBK element are those that are only defined in the shopping basket which possibly contains no or a single SBK element (230). SBK element has also attributes (232). They are used, e.g., to accommodate the limitations of the underlying PNRs. Because PNRs have inherited from past technical and regulation constraints serialization, they cannot handle, e.g., Asian characters. Hence, with the appropriate attribute, a SBK element allows shopping basket to display a passenger name, e.g., in Chinese characters.

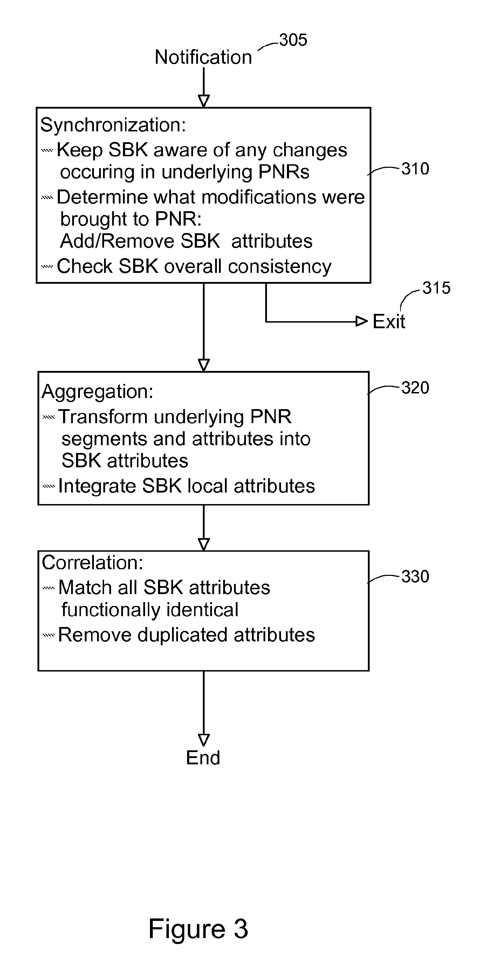

Figure 3 shows the steps of the method to continuously keep shopping basket coherent.

The prime object of the synchronization step (310) is to keep SBK aware of the changes having occurred in the underlying PNRs. Contrary to standard PNRs stored in a PNR database the shopping basket that implements super-PNR functionality is a dynamic package including a virtual SBK element whose remote attributes are queried from the corresponding segments of the underlying PNRs. Only the local attributes are actually held in SBK and need not to be queried externally.

Hence, SBK must keep track of all the necessary internal and external references to build the virtual SBK element (240) described in Figure 2. These references are stored with SBK. They include, as also shown in Figure 2, the references of the links existing between each SBK reservation record (RR) and the underlying PNR (215) thus targeting a specific PNR identifier along with a PNR version number. SBK also holds the link references between each remote attribute of the virtual SBK element and the corresponding segments of the PNRs (242) so that each segment of the targeted PNR can be properly addressed and retrieved from within the PNR. As already mentioned, the granularity of the virtual SBK element might differ from the one of underlying PNRs. Each attribute of the virtual SBK element can therefore generate references to multiple segments of the targeted PNRs. On the other hand, for a local attribute of the virtual SBK element, there is possibly only one reference to an attribute stored in the SBK element (230) of the shopping basket.

The synchronization step only synchronizes the links that have been specifically specified by the end-user of the shopping basket, i.e., the links that have been created as a result of choices made by the end-user when selecting travel products added to the shopping basket and possibly coming from independent reservation systems. This step is executed each time a notification is received (305) that an underlying linked PNR has been modified.

To determine the changes brought to the PNR the virtual SBK element is scanned to find the attributes already present in the shopping basket so that their PNR counterparts can be precisely identified. Then, the updated PNR is scanned for new segments that have possibly been added to the PNR and for segment attributes that have been modified. For any added segment a corresponding attribute is created in the virtual SBK element. Similarly, all deleted PNR segments that are no longer present in the modified PNR are actually deleted from the shopping basket.. As already pointed out, SBK is a dynamic structure that does not hold the remote PNR contents but just the necessary links to the PNRs and their segments so it can be rebuilt whenever it is necessary.

Through all changes brought to the PNRs, SBK structure must remain compatible with the structure of the underlying PNRs. Thus, the synchronization step is also in charge of checking that SBK structure is kept consistent so that the changes can indeed be imbedded at next steps. If this checking fails, the SBK updating process is aborted (315). A report or warning is issued so that a corrective action can be undertaken by the end-user at next retrieval of the shopping basket.

The aggregation step (320) follows synchronization. As the name suggests this step is in charge of aggregating and transforming the underlying PNR segments and their attributes so that they conform to the defined SBK elements. This step is also aimed at integrating the local attributes, i.e., the ones that are only stored in the shopping basket. The aggregation process is controlled, at attribute level, by a set of rules held in the shopping basket. The rules are essentially simple statements, e.g., to resolve the discrepancies that may exist between various attributes that would be locally (in the SBK) and remotely (in the underlying PNRs) defined so as to give precedence to one or the other.

The correlation step (330) is intended to make sure that all the independent underlying PNR attributes have been consistently aggregated by shopping basket. Since PNRs may be coming from independent reservation systems, differences may exist in the way attributes were coded. Thus, this step is responsible for matching all SBK functionally equivalent attributes against each other and to remove duplicated ones. Matching is done on the basis of the set of rules held in the shopping basket.

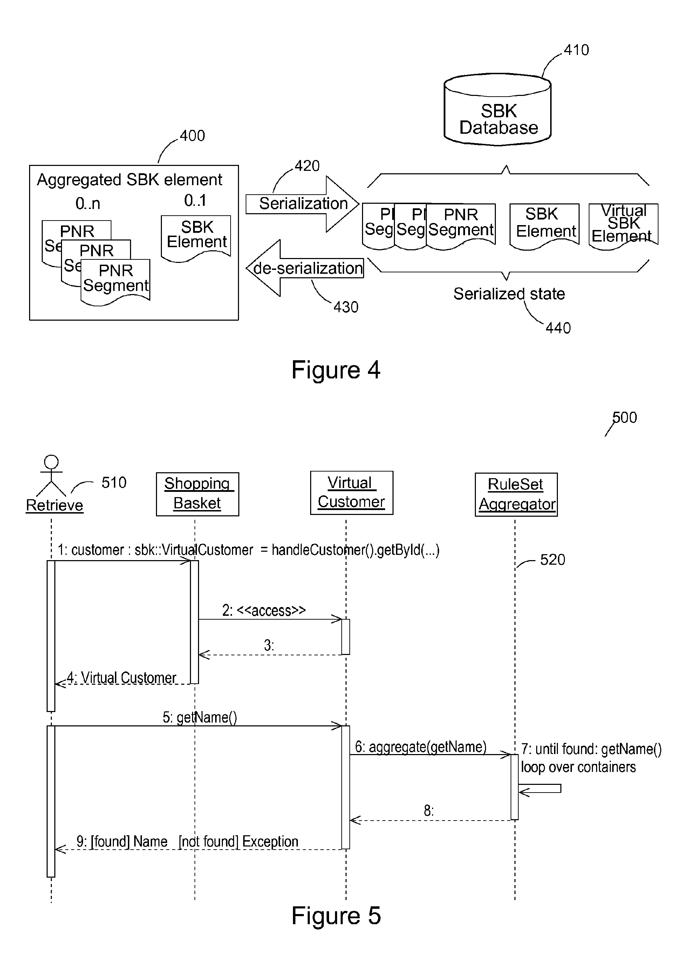

Figure 4 describes the implementation of the shopping basket.

As already discussed, SBK (400) is a dynamic entity which is built whenever necessary from records stored in a database (410) maintained by the system supporting SBK, e.g., a GDS (130) as shown in Figure 1. The SBK data model is stored and retrieved as serialized records from the database. This is handled by any appropriate software applications run from the GDS computer resources that must perform two types of transformations: serialization of the SBK into the corresponding database and de-serialization of the SBK from the stored elements.
- Serialization (420) ensures SBK persistence by storing the current state of a SBK under the form of a series of records (440) in the SBK database. The serialization process maps each element present in the SBK as a value in a XML (extended markup language) message or EDIFACT message as discussed in the background section. The SBK also needs to store a representation of every data container and each virtual element, along with the individual links between them. The serialization process takes aggregated SBK elements and breaks them up into their consistent sub elements/segment parts so that they are ready for serialization and insertion in the SBK database.
- De-serialization (430) is the converse operation. This process takes the database stored serialized elements and de-serializes them into plain SBK elements. A transformation is applied to the SBK elements which instantiates the adapters interfacing with external booking sources in order to re-build the virtual and aggregated elements.

Figure 5 discusses the virtualization layer which carries out the aggregation and correlation processes previously discussed.

As shown in Figure 3 the aggregation framework is put in place in order to be able to quickly specify how data has to be aggregated from multiple external data sources. To this end, models are created that define how the information should be gathered so that aggregation can be tailored to the specific needs of client systems. Hence, each interface defines its own way of aggregating information through a dedicated set of rules.

A simple rule set for performing aggregation is for example:

| | SBK element: Customer |
|---|---|
| Name: | *PNR attribute has precedence over SBK attribute.* |
| Phone: | *SBK and PNR attributes are both displayed through a list.* |
| Address: | *PNR attribute has precedence over SBK attribute.* |
| Last name using accentuated, Chinese, Japanese characters (i.e. rich name) : | *SBK exclusive attribute. Retrieve only the SBK attribute*. |

The framework is built on the assumption that two major types of data are aggregated: attributes and list of attributes. An exemplary state diagram illustrates a simple case of aggregation (500) where a SBK is retrieved (510) and aggregation of SBK elements exhaustively performed on the basis of a set of rules (520). Information coming from multiple sources can also be consolidated. For instance, a SBK customer may be referenced in several PNRs. A travel or check-in agent may add a note in any of the PNRs. By using a rule set that consolidates all available information into a list, the information coming from any of the PNRs can be viewed in the SBK.

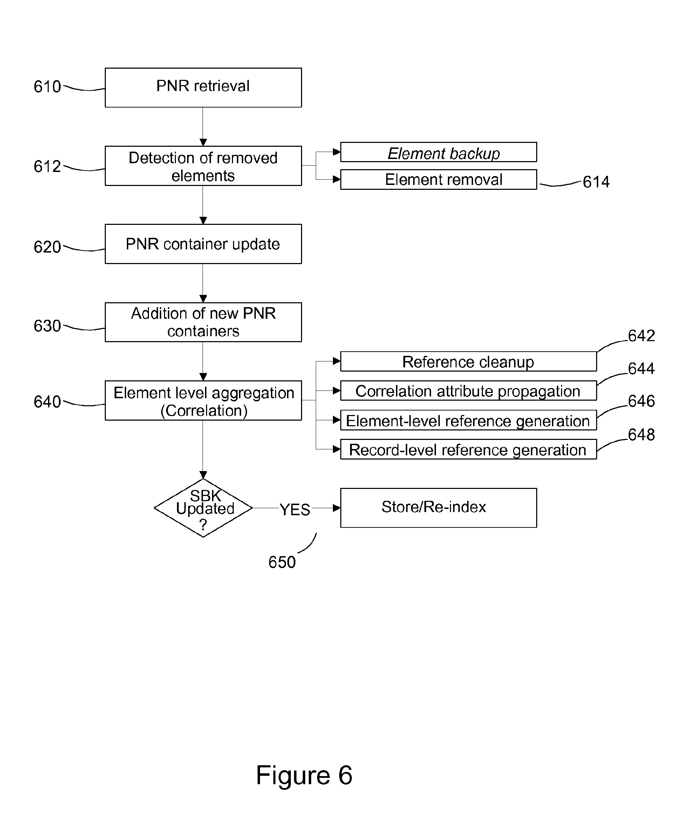

Figure 6 further describes the synchronization layer of the SBK.

The synchronization process handles the adaptation of foreign elements, i.e.: PNR segments, through adapters that are compliant with the SBK interfaces. This is carried out by attaching a resource manager, in charge of handling the retrieval of the PNR segments, to an adapter.

The synchronization layer also contains an orchestration layer that manages the data sources and creates new and updated elements. The orchestration engine is also a rule based process. When certain specified preconditions are met an action is performed. Orchestration engine is made of a set of predicates (preconditions) and of a set of actions to perform that depend on the outcome of the predicates. Following is an example of a rule intended to make sure that child data is referenced to the corresponding parent record:
- Precondition:: *A referenced PNR has been split. Create a new SBK reservation record and reference the child*
- Action:: *PNR.*
Note: PNR split process is invoked when various travel segments cannot be held within a single PNR (e.g.: because of constraints imposed by international standards). Then, a child PNR is created which references its parent PNR.

The major steps of the synchronization process are shown in flow diagram of Figure 6.

The PNR version retrieval step (610) is aimed at retrieving the PNR referenced in a current record received during a SBK de-serialization process described in Figure 4. The PNR version retrieval step is triggered when a new version is available and is preferably aborted when there is no new information to be retrieved.

The PNR is retrieved from the appropriate PNR database and decoded to create the elements composing the shopping basket. This is done on the basis of the retrieved XML or EDIFACT messages stored in the SBK database as previously discussed.

Then, a detection of the removed elements is performed (612). Each SBK virtual element referencing one or more PNR elements that are no longer present are considered as having been intentionally removed from the PNR. The corresponding SBK element is updated accordingly, i.e.: removed (614).

At step (620), for all PNR containers that have been updated, the SBK elements are updated with information coming from the new PNR segments. The external reference is also updated with the new version of the PNR.

At step (630), for all PNR segments that have been added in the referenced PNR, if the element is not already present as an adapter in the SBK, a new adapter must be created and attached to the PNR element. The new adapter is given an internal SBK identification and a reference is added to the external PNR segment.

It is worth noting here that different types of external references need to be considered in the SBK. They are:
- Latent user-specified references are currently stored in SBK database. They are not intended to synchronize any data unless users specifically asked for it. This is typically a free text value where users may enter any information relevant to their systems.
- Synchronizing external references are defined by the user at reservation record level. These are user-specified external references which trigger the whole synchronization mechanism. This is an active reference used by the synchronization.
- Generated element-to-segment external references are generated from the user-specified synchronizing references by the synchronization mechanism. These references are used when aggregating information into the unified representation of the element.

Element level aggregation (i.e.: correlation) is performed at step (640). Aggregation also takes place at element level. In this case too, a set of rules are used to determine how data must be aggregated. This is achieved by applying the rules on each element of the shopping basket. An example of a simple rule set for aggregating customers might be: *Merge if first name, last name and birth date match.* This is the final layer of aggregation before presentation. It is performed at synchronization time, whenever SBK is modified. This layer can be seen as a 'unifying' layer to merge all elements representing the same real-life entities.

The following processing steps are performed to complete the element level aggregation step (640). They are:
- The reference cleanup step (642) clears the unneeded references from a reservation record. They are re-created/updated in a later procedure. All references between virtual elements and PNR information containers are removed. Also, all references between reservation records and virtual elements are removed.
- The correlation step (644) between information containers and virtual elements calls the element-matching-process defined by the correlator previously discussed. For elements that match, a reference between them is created. For elements that do not match the necessary virtual elements are generated (646).
- The generation of reservation record level relations is done at step (648) for each PNR container. A check is performed that a reference exists between the PNR container's parent virtual element and the reservation record corresponding to the PNR container's identifier. If not it is generated.

Finally, when SBK is updated it is stored (650).

## Claims

1. A method of keeping coherent the data of a booking cluster gathering definition data of travel products obtained from a plurality of travel service providers (150), the method comprising the steps of:
synchronizing (310) the data of the booking cluster by:
receiving definition data changes from a travel service provider,
determining what changes have been brought by the travel service
provider to the definition data; and
aggregating (320) the changes into the booking cluster by:
transforming the definition data changes into remote attributes of the booking cluster,
integrating local attributes into the booking cluster; and
correlating (330) all attributes of the booking cluster against each other by:
matching all attributes functionally equivalent; and,
removing duplicated attributes from the booking cluster.

2. The method of claim 1 wherein the definition data of travel products are characteristics of passenger name records (PNRs) issued from computerized reservation systems of a plurality of travel service providers, and wherein characteristics of the passenger name records are comprised of segments and attributes (220).

3. The method of claim 2 comprising the step of, for each passenger name record, creating a reservation record (210) in the booking cluster, said reservation record (210) maintaining a link with said passenger name record.

4. The method of claim 2 or claim 3 wherein the step of determining what changes have been brought by a travel service provider to the definition data consists in scanning a passenger name record for determining what segments and attributes of said passenger name record have been removed or added by the travel service provider.

5. The method of claim 4 further including the step of determining what attributes of the booking cluster must be modified, removed and added.

6. The method of any of the claims 2 to 5 comprising the step of defining a link between each remote attribute of the booking cluster and at least one segment of at least one passenger name record.

7. The method of claim 6 comprising storing the links in the booking cluster.

8. The method of any of the preceding claims wherein the booking cluster is stored back in a database of booking clusters under the form of a series of records by a serialization process.

9. The method of the preceding claim wherein the booking cluster is restored upon request by a de-serialization process from the series of records stored in the database of booking clusters.

10. The method of any of the preceding claims wherein the aggregating and correlating steps are driven by a set of rules held in the booking cluster.

11. A system of keeping coherent the data of a booking cluster gathering definition data of travel products derived from characteristics of passenger name records from a plurality of travel service providers (150),
wherein the booking cluster comprises:
reservation records (210) each maintaining a link (215) with one passenger name record;
a shopping basket element (230) holding local attributes specific to the booking cluster;
a virtual shopping basket element (240) aggregating remote attributes each having a link (242) to at least one segment of at least one
passenger name record,
and said system comprising:
means for synchronizing (310) the data of the booking cluster, said means adapted for:
receiving definition data changes from a travel service provider,
determining what changes have been brought by the travel service provider to the definition data; and
means for aggregating (320) the changes into the booking cluster, said means adapted for:
transforming the definition data changes into remote attributes of the booking cluster,
integrating local attributes into the booking cluster;
means for correlating (330) all attributes of the booking cluster against each other, said means adapted for:
matching all attributes functionally equivalent; and,
removing duplicated attributes from the booking cluster.

12. System of claim 11 wherein the booking cluster comprises a repository of rules for driving the aggregating means and the correlating means.

13. A computer program product stored on a computer readable storage medium, comprising computer readable code means for causing at least one computer to operate the method of keeping coherent the data of a booking cluster according to any one of the claims 1 to 10.
